# EUROPEAN PATENT APPLICATION

(11) **EP 4 610 266 A1**
(43) Date of publication of application: **03.09.2025**
(21) Application number: 23882542.6
(22) Date of filing: 20.10.2023
(51) Int. Cl.: C07F 7/12, C07B 61/00

(54) **METHOD FOR PRODUCING ORGANOSILICON COMPOUND HAVING (METH)ACRYLOXY GROUP, AND ORGANOSILICON COMPOUND HAVING ACRYLOXY GROUP**

(30) Priority: 25.10.2022 JP 2022170839
(71) Applicant: SHIN-ETSU CHEMICAL CO., LTD., Tokyo 1000005 (JP)
(72) Inventor: KAWAKAMI Masato, Joetsu-shi, Niigata 942-8601 (JP)
(74) Representative: Mewburn Ellis LLP
(86) International application number: PCT/JP2023/037969
(87) International publication number: WO 2024/090337

(57) **Abstract**

Provided is a production method comprising subjecting a siloxyalkylhalosilane compound represented by general formula (1) 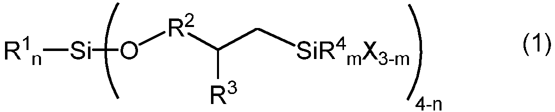 (R¹ represents a monovalent hydrocarbon group, R² represents a divalent hydrocarbon group, R³ represents a hydrogen atom or a monovalent hydrocarbon group, R⁴ represents a monovalent hydrocarbon group, X represents a chlorine atom or a bromine atom, m represents 0, 1, or 2, and n represents 0, 1, 2, or 3) and
a carboxylic acid halide represented by general formula (2) 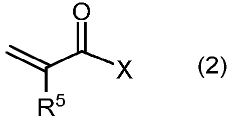 (R⁵ represents a hydrogen atom, a chlorine atom, or a monovalent hydrocarbon, and X is the same as above)
to a siloxy-(meth)acryloxy exchange reaction in the presence of at least one metal compound selected from the group consisting of zinc, copper, and iron, to obtain an organosilicon compound having a (meth)acryloxy group, represented by general formula (3) 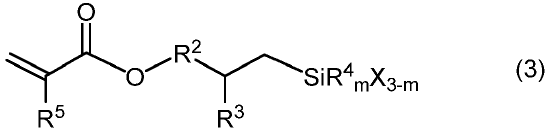 (R²-R⁵, X, and m are the same as above).
In principle, the production method does not produce a (meth)acrylic adduct or a bis-adduct, and stably provides an organosilicon compound having a (meth)acryloxy group in high yield and high purity.

## Description

### TECHNICAL FIELD

The present invention relates to a method for preparing (meth)acryloxy group-containing organosilicon compounds, and to acryloxy group-containing organosilicon compounds.

### BACKGROUND ART

Organosilicon compounds having a hydrolyzable silyl group and an organic group make it possible, via the formation of covalent bonds between silanol groups that form by hydrolysis of the hydrolyzable silyl group and hydroxyl groups on the surface of an inorganic material and via reaction of the organic group with an organic material, to join together organic materials and inorganic materials which normally are difficult to join. This enables organic-inorganic composite materials to be conferred with such properties as heat resistance, water resistance, weather resistance, increased mechanical strength, adhesion, dispersibility, water repellency and corrosion resistance.

By virtue of these properties, the above organosilicon compounds are employed in a broad range of fields and applications, including silane coupling agents, resin additives, surface treatment agents, textile treatments, adhesives, paint additives and polymer modifiers.

Even among such organosilicon compounds, (meth)acryloxy group-containing organosilicon compounds, given that the (meth)acryloxy group --which is a polymerizable functional group-- copolymerizes with a variety of radical polymerizable monomers, are useful themselves as radical polymerizable monomers for obtaining silicon-containing polymers.

Examples of such (meth)acryloxy group-containing organosilicon compounds include 3-acryloxypropyltrichlorosilane, 3-acryloxypropyldimethylchlorosilane, 3-methacryloxypropyltrichlorosilane and 3-methacryloxypropyldimethylchlorosilane. In particular, (meth)acryloxyalkylmonochlorosilane compounds such as 3-acryloxypropyldimethylchlorosilane and 3-methacryloxypropyldimethylchlorosilane are also used as anionic polymer end group modifiers.

The above (meth)acryloxy group-containing organosilicon compounds are generally synthesized by subjecting a hydrohalosilane compound and an alkenyl group-containing (meth)acrylate compound to a hydrosilylation reaction using a transition metal catalyst (Patent Document 1).

Also, it has been reported that (meth)acryloxyalkylmonochlorosilane compounds such as 4-methacryloxybutyldimethylchlorosilane can be prepared by reacting a cyclic organoxysilane compound with methacryloyl chloride in the presence of zinc chloride (Non-Patent Document 1).

### PRIOR ART DOCUMENTS

### PATENT DOCUMENT

Patent Document 1: JP-A H09-202791

### NON-PATENT DOCUMENT

Non-Patent Document 1: Zhurnal Obshchei Khimii, 58 (9), pp. 2145-2148 (1988)

### SUMMARY OF INVENTION

### TECHNICAL PROBLEM

In Patent Document 1, the allyl group and the (meth)acryloxy group on an allyl group-containing allyl (meth)acrylate are each functional groups which are capable of reacting with a hydrohalosilane compound. Therefore, in addition to the target (meth)acryloxyalkylhalosilane compound that forms when a hydrohalosilane compound reacts with the allyl group of the allyl group-containing allyl (meth)acrylate, compounds formed by reaction of the hydrohalosilane compound with the (meth)acryloxy group of the allyl (meth)acrylate (which compounds are also referred to below as "(meth)acryloxy adducts") and compounds formed by reaction of the hydrohalosilane with the allyl group and the (meth)acryloxy group of the allyl (meth)acrylate (which compounds are also referred to below as "bis-adducts") arise. When these compounds form, the yield of the target (meth)acryloxyalkylhalosilane compound decreases. In particular, because acryloxy group-containing compounds have a low steric hindrance and good reactivity, acrylic adducts and bis-adducts which are not the target compounds readily form. Moreover, because the (meth)aryloxy group within a (meth)acryloxy group-containing organosilicon compound undergoes reduction, ultimately resulting in loss of the (meth)acryloxy group from the molecule, it becomes impossible to achieve the target performance when such compounds are used in various applications.

Also, because the (meth)acrylic adducts and bis-adducts have boiling points which are close to that of the target (meth)acryloxyalkylhalosilane compound, a long time or multiple operations are required to separate these by distillation. Yet, given that (meth)acryloxy groups are polymerizable functional groups, prolonged exposure to high temperatures is undesirable because it can result in polymerization of the target product. Not only is it a lot of trouble to carry out multiple distillations, doing so leads to a corresponding decline in the yield of the target product.

The method of Non-Patent Document 1 is able to prepare the target product in a high yield, but the cyclic organoxysilane compound serving as the starting material has self-reactivity. As a result, self-polymerization --which is not the desired reactionarises when the reaction is carried out on an industrial scale, whereupon the viscosity of the reaction mixture increases markedly and, not only does the target product not form, the reaction solution may ultimately be impossible to recover from the reaction vessel. For these reasons, it is difficult to use a cyclic organoxysilane compound as the starting material.

The present invention was arrived at in light of the above circumstances. The objects of the invention are to provide a method of preparation which can stably obtain (meth)acryloxy group-containing organosilicon compounds in a high yield and at high purity without, in principle, the formation of (meth)acrylic adducts and bis-adducts, and to provide acryloxy group-containing organosilicon compounds.

### SOLUTION TO PROBLEM

The inventor has conducted intensive investigations aimed at achieving the above objects and discovered as a result that by reacting a siloxyalkylhalosilane compound with a (meth)acryloyl halide in the presence of a specific metal compound, a (meth)acryloxyalkylhalosilane compound can be prepared in a high yield and at high purity without the formation of (meth)acrylic adducts or bis-adducts, and also without using a compound having self-reactivity. This discovery ultimately led to the present invention.

Accordingly, the invention provides:
1. A method for preparing a (meth)acryloxy group-containing organosilicon compound, which method includes the step of subjecting a siloxyalkylhalosilane compound of general formula (1) below 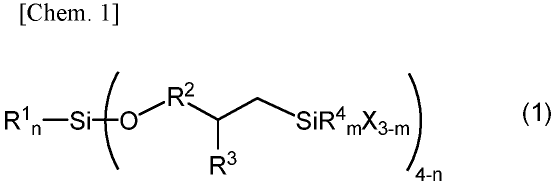 (wherein R¹ is an unsubstituted monovalent hydrocarbon group of 1 to 20 carbon atoms, each R² is independently a substituted or unsubstituted divalent hydrocarbon group of 1 to 20 carbon atoms which may include at least one atom selected from the group consisting of O, S and Si, each R³ is independently a hydrogen atom or an unsubstituted monovalent hydrocarbon group of 1 to 10 carbon atoms, each R⁴ is independently an unsubstituted monovalent hydrocarbon group of 1 to 10 carbon atoms, X is a chlorine atom or a bromine atom, m is 0, 1 or 2, and n is 0, 1, 2 or 3) and a carboxylic acid halide of general formula (2) below 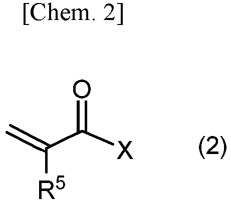 (wherein R⁵ is a hydrogen atom, a chlorine atom or an unsubstituted monovalent hydrocarbon group of 1 to 10 carbon atoms, and X is as defined above) to a siloxy-(meth)acryloxy exchange reaction in the presence of at least one metal compound selected from the group consisting of zinc compounds, copper compounds and iron compounds to obtain a (meth)acryloxy group-containing organosilicon compound of general formula (3) below 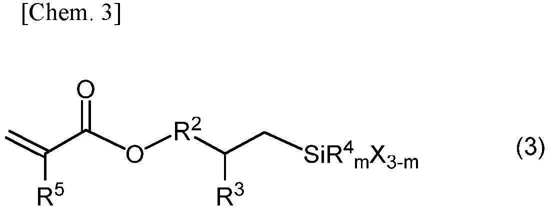 (wherein R² to R⁵, X and m are as defined above);
2. The method for preparing a (meth)acryloxy group-containing organosilicon compound according to 1 above, which method further includes the step of subjecting an unsaturated bond-containing organoxysilane compound of general formula (4) below 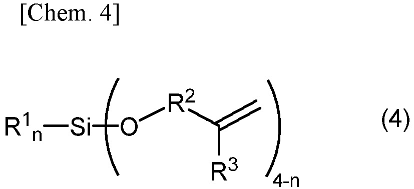 (wherein R¹ to R³ and n are as defined above) and a hydrohalosilane compound of general formula (5) below

   H-SiR⁴ₘX₃₋ₘ (5)

   (wherein R⁴, X and m are as defined above) to a hydrosilylation reaction in the presence of a platinum catalyst to obtain a siloxyalkylhalosilane compound of general formula (1); and 3. An acryloxy group-containing organosilicon compound of general formula (6) below 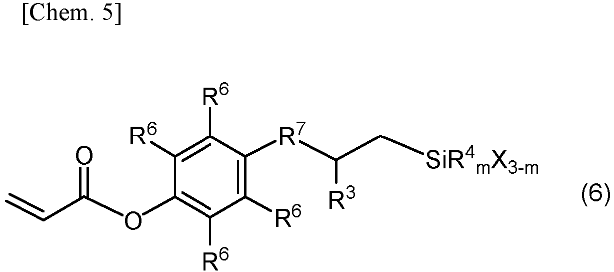 (wherein each R⁶ is independently a hydrogen atom, a substituted or unsubstituted monovalent hydrocarbon group of 1 to 10 carbon atoms which may include a heteroatom, or an acryloxy group, R⁷ is a single bond or a divalent hydrocarbon group of 1 to 10 carbon atoms which may include O or S, R³ is a hydrogen atom or an unsubstituted monovalent hydrocarbon group of 1 to 10 carbon atoms, each R⁴ is independently an unsubstituted monovalent hydrocarbon group of 1 to 10 carbon atoms, X is a chlorine atom or a bromine atom, and m is 0, 1 or 2).

### ADVANTAGEOUS EFFECTS OF INVENTION

By way of this invention, a (meth)acryloxyalkylhalosilane compound can be prepared stably in a high yield and at high purity without forming (meth)acrylic adducts or bis-adducts and, moreover, without the use of a compound having self-reactivity.

### BRIEF DESCRIPTION OF DRAWING

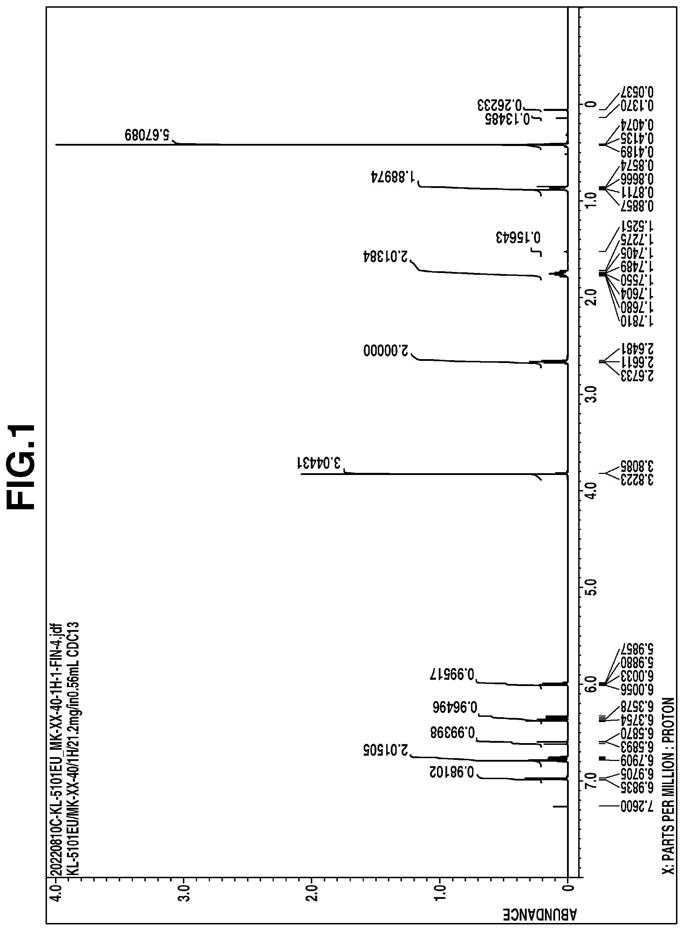

[FIG. 1] FIG. 1 is a diagram showing the ¹H-NMR spectrum of the 4-chlorodimethylsilylpropyl-2-methoxyphenyl acrylate obtained in Example 3.

### DESCRIPTION OF EMBODIMENTS

The invention is described more fully below.

The inventive method for preparing a (meth)acryloxy group-containing organosilicon compound includes the step of subjecting a siloxyalkylhalosilane compound of general formula (1) below (referred to below as "Compound (1)") and a carboxylic acid halide of general formula (2) below (referred to below as "Compound (2)") to a siloxy-(meth)acryloxy exchange reaction in the presence of at least one metal compound selected from the group consisting of zinc compounds, copper compounds and iron compounds to obtain a (meth)acryloxy group-containing organosilicon compound of general formula (3) below (referred to below as "Compound (3)").

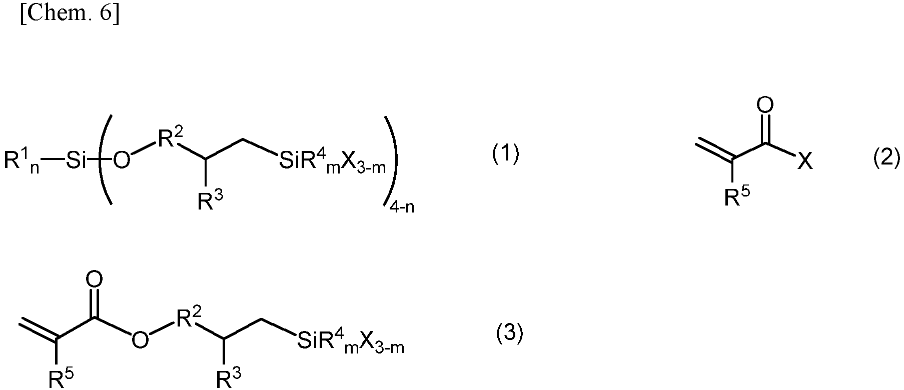

In general formula (1), R¹ is an unsubstituted monovalent hydrocarbon group of 1 to 20 carbon atoms, preferably 1 to 18 carbon atoms, more preferably 1 to 10 carbon atoms, and even more preferably 1 to 6 carbon atoms.

The monovalent hydrocarbon group of R¹ may be linear, branched or cyclic. Specific examples include linear alkyl groups such as methyl, ethyl, n-propyl, n-butyl, n-pentyl, n-hexyl, n-heptyl, n-octyl, decyl, dodecyl, tetradecyl, hexadecyl and octadecyl groups; branched alkyl groups such as isopropyl, isobutyl, sec-butyl, tert-butyl, neopentyl, thexyl and 2-ethylhexyl groups; cyclic alkyl groups such as cyclopentyl and cyclohexyl groups; alkenyl groups such as vinyl, allyl (2-propenyl), 1-propenyl, butenyl, pentenyl and octenyl groups; aryl groups such as phenyl and tolyl groups; and aralkyl groups such as benzyl and phenethyl groups.

Of these, from the standpoint of the availability of the starting materials, linear or branched alkyl groups are preferred.

In general formula (1), each R² is independently a substituted or unsubstituted divalent hydrocarbon group of 1 to 20 carbon atoms, preferably 1 to 10 carbon atoms, and more preferably 1 to 8 carbon atoms, which may include at least one atom selected from the group consisting of O, S and Si.

The divalent hydrocarbon group of R² may be linear, branched or cyclic. Specific examples include linear alkylene groups such as methylene, ethylene, trimethylene, tetramethylene, hexamethylene and octamethylene groups; branched alkylene groups such as methylethylene (propylene) and methyltrimethylene groups; cyclic alkylene groups such as cyclohexylene and methylenecyclohexylenemethylene groups; linear alkenylene groups such propenylene, butenylene, hexenylene and octenylene groups; branched alkenylene groups such as isopropenylene and isobutenylene groups; arylene groups such as the phenylene group; and aralkylene groups such as methylenephenylene and methylenephenylenemethylene groups.

Of these, from the standpoint of the availability of the starting materials, linear alkylene groups and aralkylene groups are preferred.

Some or all of the hydrogen atoms in the divalent hydrocarbon groups of R² may be substituted. Examples of such substituents include alkoxy groups of 1 to 3 carbon atoms, halogen atoms such as chlorine, bromine and iodine atoms, aryl groups of 6 to 10 carbon atoms, aralkyl groups of 7 to 10 carbon atoms, and cyano, amino, acyl and carboxyl groups.

The divalent hydrocarbon group of R² containing at least one atom selected from the group consisting of O, S and Si is exemplified by oxyalkylene, alkyleneoxyalkylene, oxyarylene, oxyaralkylene, thioalkylene, alkylenethioalkylene, thioarylene, thioaralkylene, alkylenedialkylsilylalkylene, alkylenedialkylsilylarylene and alkylenedialkylsilylaralkylene groups. These alkylene, arylene and aralkylene groups are exemplified by the same groups as mentioned above.

Of these, from the standpoint of the availability of the starting materials, oxyalkylene groups and oxyaralkylene groups are preferred. Of these, from the standpoint of the availability of the starting materials, oxyalkylene groups and oxyaralkylene groups are preferred.

In general formula (1), each R³ is independently a hydrogen atom or an unsubstituted monovalent hydrocarbon group of 1 to 10 carbon atoms, preferably 1 to 6 carbon atoms.

The monovalent hydrocarbon group of R³ may be linear, branched or cyclic. Specific examples include linear alkyl groups such as methyl, ethyl, n-propyl, n-butyl, n-pentyl, n-hexyl, n-heptyl, n-octyl and decyl groups; branched alkyl groups such as isopropyl, isobutyl, sec-butyl, tert-butyl, neopentyl, thexyl and 2-ethylhexyl groups; cyclic alkyl groups such as cyclopentyl and cyclohexyl groups; alkenyl groups such as vinyl, allyl (2-propenyl), 1-propenyl, butenyl, pentenyl and octenyl groups; aryl groups such as phenyl and tolyl groups; and aralkyl groups such as benzyl and phenethyl groups.

Of these, from the standpoint of the availability of the starting materials, methyl, ethyl, isopropyl, tert-butyl and phenyl groups are preferred.

In general formula (1), each R⁴ is independently an unsubstituted monovalent hydrocarbon group of 1 to 10 carbon atoms, preferably 1 to 6 carbon atoms. The monovalent hydrocarbon group of R⁴ is exemplified by the same groups as R³ above, although from the standpoint of the availability of the starting materials, a methyl group is preferred.

In general formula (1), each X is independently a chlorine atom or a bromine atom. From the standpoint of the availability of the starting materials and of safety, a chlorine atom is preferred.

In general formula (1), m is 0, 1 or 2, and is preferably 2.

In general formula (1), n is 0, 1, 2 or 3, and is preferably 3.

Specific examples of compound (1) include trialkylsiloxy group-containing monohalosilane compounds such as trimethylsiloxypropyldimethylchlorosilane, triethylsiloxypropyldimethylchlorosilane, tert-butyldimethylsiloxypropyldimethylchlorosilane, triisopropylsiloxypropyldimethylchlorosilane, dimethylhexylsiloxypropyldimethylchlorosilane, dimethyloctylsiloxypropyldimethylchlorosilane, dimethyldecylsiloxypropyldimethylchlorosilane, dimethyldodecylsiloxypropyldimethylchlorosilane, dimethyltetradecylsiloxypropyldimethylchlorosilane, dimethylhexadecylsiloxypropyldimethylchlorosilane, dimethyloctadecylsiloxypropyldimethylchlorosilane, diphenylmethylsiloxypropyldimethylchlorosilane, trimethylsiloxyoctyldimethylchlorosilane, triethylsiloxyoctyldimethylchlorosilane, tert-butyldimethylsiloxyoctyldimethylchlorosilane, triisopropylsiloxyoctyldimethylchlorosilane, (4-chlorodimethylsilylpropyl-2-methoxy-1-trimethylsiloxy)benzene, (2-chlorodimethylsilylpropyl-1-trimethylsiloxy)benzene, (1,2-bis(trimethylsiloxy)-3-chlorodimethylsilylpropyl)benzene, (1,2-bis(trimethylsiloxy)-4-chlorodimethylsilylpropyl)benzene, (1,2-bis(trimethylsiloxy)-5-chlorodimethylsilylpropyl)benzene, (1,3-bis(trimethylsiloxy)-2-chlorodimethylsilylpropyl)benzene, (1,3-bis(trimethylsiloxy)-4-chlorodimethylsilylpropyl)benzene, (1,3-bis(trimethylsiloxy)-5-chlorodimethylsilylpropyl)benzene, (1,4-bis(trimethylsiloxy)-2-chlorodimethylsilylpropyl)benzene, trimethylsiloxypropyldimethylbromosilane, triethylsiloxypropyldimethylbromosilane, tert-butyldimethylsiloxypropyldimethylbromosilane, triisopropylsiloxypropyldimethylbromosilane, trimethylsiloxyoctyldimethylbromosilane, triethylsiloxyoctyldimethylbromosilane, tert-butyldimethylsiloxyoctyldimethylbromosilane, triisopropylsiloxyoctyldimethylbromosilane, (4-bromodimethylsilylpropyl-2-methoxy-1-trimethylsiloxy)benzene and (2-bromodimethylsilylpropyl-1-trimethylsiloxy)benzene; trialkylsiloxy group-containing alkyldihalosilane compounds such as trimethylsiloxypropylmethyldichlorosilane, triethylsiloxypropylmethyldichlorosilane, tert-butyldimethylsiloxypropylmethyldichlorosilane, triisopropylsiloxypropylmethyldichlorosilane, trimethylsiloxyoctylmethyldichlorosilane, triethylsiloxyoctylmethyldichlorosilane, tert-butyldimethylsiloxyoctylmethyldichlorosilane, triisopropylsiloxyoctylmethyldichlorosilane, (4-dichloromethylsilylpropyl-2-methoxy-1-trimethylsiloxy)benzene, (2-dichloromethylsilylpropyl-1-trimethylsiloxy)benzene, (1,2-bis(trimethylsiloxy)-3-dichloromethylsilylpropyl)benzene, (1,2-bis(trimethylsiloxy)-4-dichloromethylsilylpropyl)benzene, (1,2-bis(trimethylsiloxy)-5-dichloromethylsilylpropyl)benzene, (1,3-bis(trimethylsiloxy)-2-dichloromethylsilylpropyl)benzene, (1,3-bis(trimethylsiloxy)-4-dichloromethylsilylpropyl)benzene, (1,3-bis(trimethylsiloxy)-5-dichloromethylsilylpropyl)benzene and (1,4-bis(trimethylsiloxy)-2-dichloromethylsilylpropyl)benzene; trialkylsiloxy group-containing trihalosilane compounds such as trimethylsiloxypropyltrichlorosilane, triethylsiloxypropyltrichlorosilane, tert-butyldimethylsiloxypropyltrichlorosilane, triisopropylsiloxypropyltrichlorosilane, trimethylsiloxyoctyltrichlorosilane, triethylsiloxyoctyltrichlorosilane, tert-butyldimethylsiloxyoctyltrichlorosilane, triisopropylsiloxyoctyltrichlorosilane, (4-trichlorosilylpropyl-2-methoxy-1-trimethylsiloxy)benzene, (2-trichlorosilylpropyl-1-trimethylsiloxy)benzene, (1,2-bis(trimethylsiloxy)-3-trichlorosilylpropyl)benzene, (1,2-bis(trimethylsiloxy)-4-trichlorosilylpropyl)benzene, (1,2-bis(trimethylsiloxy)-5-trichlorosilylpropyl)benzene, (1,3-bis(trimethylsiloxy)-2-trichlorosilylpropyl)benzene, (1,3-bis(trimethylsiloxy)-4-trichlorosilylpropyl)benzene, (1,3-bis(trimethylsiloxy)-5-trichlorosilylpropyl)benzene and (1,4-bis(trimethylsiloxy)-2-trichlorosilylpropyl)benzene; bis(monochlorodialkylsilylalkoxy)dialkylsilane compounds such as bis(chlorodimethylsilylpropoxy)dimethylsilane, bis(chlorodimethylsilylpropoxy)ethylmethylsilane, bis(chlorodimethylsilylpropoxy)dipropylsilane, bis(chlorodimethylsilylpropoxy)dibutylsilane, bis(chlorodimethylsilylpropoxy)phenylmethylsilane, bis(chlorodimethylsilylpropoxy)diphenylsilane, bis(chlorodimethylsilyloctoxy)dimethylsilane, bis(chlorodimethylsilyloctoxy)ethylmethylsilane, bis(chlorodimethylsilyloctoxy)dipropylsilane, bis(chlorodimethylsilyloctoxy)dibutylsilane, bis(chlorodimethylsilyloctoxy)phenylmethylsilane and bis(chlorodimethylsilyloctoxy)diphenylsilane; bis(dichloroalkylsilylalkoxy)dialkylsilane compounds such as bis(dichloromethylsilylpropoxy)dimethylsilane, bis(dichloromethylsilylpropoxy)ethylmethylsilane, bis(dichloromethylsilylpropoxy)dipropylsilane, bis(dichloromethylsilylpropoxy)dibutylsilane, bis(dichloromethylsilylpropoxy)phenylmethylsilane, bis(dichloromethylsilylpropoxy)diphenylsilane, bis(dichloromethylsilyloctoxy)dimethylsilane, bis(dichloromethylsilyloctoxy)ethylmethylsilane, bis(dichloromethylsilyloctoxy)dipropylsilane, bis(dichloromethylsilyloctoxy)dibutylsilane, bis(dichloromethylsilyloctoxy)phenylmethylsilane and bis(dichloromethylsilyloctoxy)diphenylsilane; bis(trihalosilylalkoxy)dialkylsilane compounds such as bis(trichlorosilylpropoxy)dimethylsilane, bis(trichlorosilylpropoxy)ethylmethylsilane, bis(trichlorosilylpropoxy)dipropylsilane, bis(trichlorosilylpropoxy)dibutylsilane, bis(trichlorosilylpropoxy)phenylmethylsilane, bis(trichlorosilylpropoxy)diphenylsilane, bis(trichlorosilyloctoxy)dimethylsilane, bis(trichlorosilyloctoxy)ethylmethylsilane, bis(trichlorosilyloctoxy)dipropylsilane, bis(trichlorosilyloctoxy)dibutylsilane, bis(trichlorosilyloctoxy)phenylmethylsilane and bis(trichlorosilyloctoxy)diphenylsilane; tris(halodialkylsilylalkoxy)alkylsilane compounds such as tris(chlorodimethylsilylpropoxy)methylsilane, tris(chlorodimethylsilylpropoxy)hexylsilane, tris(chlorodimethylsilylpropoxy)octylsilane and tris(chlorodimethylsilylpropoxy)phenylsilane; tris(dihaloalkylsilylalkoxy)alkylsilane compounds such as tris(dichloromethylsilylpropoxy)methylsilane, tris(dichloromethylsilylpropoxy)hexylsilane, tris(dichloromethylsilylpropoxy)octylsilane and tris(dichloromethylsilylpropoxy)phenylsilane; tris(trihalosilylalkoxy)alkylsilane compounds such as tris(trichlorosilylpropoxy)methylsilane, tris(trichlorosilylpropoxy)hexylsilane, tris(trichlorosilylpropoxy)octylsilane and tris(trichlorosilylpropoxy)phenylsilane; and tetrakis(halosilylpropoxy)silane compounds such as tetrakis(chlorodimethylsilylpropoxy)silane, tetrakis(dihalomethylsilylpropoxy)silane and tetrakis(trihalosilylpropoxy)silane.

In above general formula (2), R⁵ is a hydrogen atom, a chlorine atom or an unsubstituted monovalent hydrocarbon group of 1 to 10 carbon atoms, preferably 1 to 6 carbon atoms, and more preferably 1 carbon atom.

The monovalent hydrocarbon group of R⁵ is exemplified by the same groups as for R³ or R⁴. From the standpoint of the availability of the starting materials and the usefulness of the product, a hydrogen atom or a methyl group is preferred.

In general formula (2), X has the same meaning as in general formula (1) above.

Specific examples of Compound (2) include acryloyl chloride, methacryloyl chloride, chloroacryloyl chloride, (trifluoromethyl)acryloyl chloride, itaconoyl chloride, acryloyl bromide, methacryloyl bromide, chloroacryloyl bromide, (trifluoromethyl)acryloyl bromide and itaconoyl bromide.

In the preparation method of the invention, the ratio between the amounts of Compounds (1) and (2) used is not particularly limited, although the amount of Compound (2) used per mole of siloxy groups included in Compound (1) is preferably from 1 to 1.5 moles, more preferably from 1 to 1.2 moles, and even more preferably from 1 to 1.05 moles.

The inventive method of preparation is carried out in the presence of at least one metal compound selected from the group consisting of zinc compounds, copper compounds and iron compounds.

Specific examples of metal compounds include zinc compounds such as zinc oxide, zinc chloride, zinc bromide, zinc iodide, zinc acetate and zinc trifluoromethanesulfonate; copper compounds such as copper(II) oxide, copper(I) oxide, copper(II) chloride, copper(I) chloride, copper(II) bromide, copper(I) bromide, copper(II) iodide, copper(I) iodide, copper(II) acetate, copper(I) acetate and copper(II) trifluoromethanesulfonate; and iron compounds such as iron(III) oxide, iron(II) oxide, iron(III) chloride, iron(II) chloride, iron(III) bromide, iron(II) bromide, iron(III) acetate, iron(II) acetate, iron(III) trifluoromethanesulfonate and iron(II) trifluoromethanesulfonate.

Of these, in terms of reactivity and ease of handling, zinc oxide, copper bromide and iron(III) chloride are preferred, zinc compounds are more preferred, and zinc oxide is still more preferred.

The amount of metal compound used is not particularly limited, although the amount with respect to the number of moles of siloxy groups in Compound (1) is preferably from 0.01 to 10 mol%, more preferably from 0.05 to 5 mol%, and even more preferably from 0.1 to 2 mol%.

The reaction temperature in the siloxy-(meth)acryloxy exchange reaction, although not particularly limited, is preferably between 40°C and 120°C, more preferably between 60°C and 100°C, and even more preferably between 80°C and 100°C.

The reaction time in the siloxy-(meth)acryloxy exchange reaction, although not particularly limited, is preferably from 0.5 to 10 hours, and more preferably from 0.5 to 4 hours.

The siloxy-(meth)acryloxy exchange reaction proceeds even in the absence of a solvent, although using a solvent is also possible. Examples of solvents that may be used include (iso)paraffinic compounds such as hexane, octane, isooctane, decane, dodecane and isododecane; aromatic hydrocarbon compounds such as toluene and xylene; ether compounds such as tetrahydrofuran, 2-methyltetrahydrofuran, 4-methyltetrahydropyran, cyclopentyl methyl ether, dioxane, ethylene glycol dimethyl ether and propylene glycol dimethyl ether; and nitrile compounds such as acetonitrile, propionitrile and butyronitrile. These may be used singly or two or more may be used in admixture.

The siloxy-(meth)acryloxy exchange reaction is preferably carried out with the addition of a polymerization inhibitor in order to suppress the polymerization of Compound (3) which is the target compound and of Compound (2) serving as the substrate.

Exemplary polymerization inhibitors include commonly used methoxyphenol compounds, hydroxyphenol compounds, hindered phenol compounds and phenothiazine compounds.

Of these, particularly from the standpoint of availability, 4-methoxyphenol, 2-methyl-4-methoxyphenol, 2-tert-butyl-4-methoxyphenol, 4-hydroxyphenol, 2,6-di-tert-butyl-4-methylphenol (BHT), 4,4-methylenebis(2,6-di-tert-butylphenol), 2,2-methylenebis(6-tert-butyl-4-methylphenol), 2,6-di-tert-butyl-4-dimethylaminomethylphenol, 2,6-di-tert-butyl-4-methoxyphenol, 2,6-di-tert-butyl-4-hydroxyphenol, 3,4-dihydro-2,5,7,8-tetramethyl-2-(4,8,12-trimethyltridecyl)-2H-1-benzopyran-6-ol, phenothiazine and 3,7-dioctylphenothiazine are preferred.

A single polymerization inhibitor may be used alone or two or more from within the respective groups may be used in combination.

The amount of polymerization inhibitor used is not particularly limited, but is preferably from 0.0001 to 10 wt%, more preferably from 0.001 to 5 wt%, and even more preferably from 0.01 to 1 wt%, with respect to Compound (2).

In general formula (3) above, R² to R⁵, X and m have the same meanings as above. Specific examples of Compound (3) which can be obtained in this invention include (meth)acryloxy group-containing dialkylchlorosilane compounds such as acryloxypropyldimethylchlorosilane, acryloxypentyldimethylchlorosilane, acryloxyoctyldimethylchlorosilane, acryloxyethoxypropylmethyldichlorosilane, (4-chlorodimethylsilylpropyl-2-methoxy)phenyl acrylate, (2-chlorodimethylsilylpropyl-1-acryloxy)phenyl acrylate, (1,2-bis(acryloxy)-3-chlorodimethylsilylpropyl)benzene, (1,2-bis(acryloxy)-4-chlorodimethylsilylpropyl)benzene, (1,2-bis(acryloxy)-5-chlorodimethylsilylpropyl)benzene, (1,3-bis(acryloxy)-2-chlorodimethylsilylpropyl)benzene, (1,3-bis(acryloxy)-4-chlorodimethylsilylpropyl)benzene, (1,3-bis(acryloxy)-5-chlorodimethylsilylpropyl)benzene, (1,4-bis(acryloxy)-2-chlorodimethylsilylpropyl)benzene, methacryloxypropyldimethylchlorosilane, methacryloxypentyldimethylchlorosilane, methacryloxyoctyldimethylchlorosilane, methacryloxyethoxypropylmethyldichlorosilane, (4-chlorodimethylsilylpropyl-2-methoxy)phenyl methacrylate, (2-chlorodimethylsilylpropyl-1-acryloxy)phenyl methacrylate, (1,2-bis(methacryloxy)-3-chlorodimethylsilylpropyl)benzene, (1,2-bis(methacryloxy)-4-chlorodimethylsilylpropyl)benzene, (1,2-bis(methacryloxy)-5-chlorodimethylsilylpropyl)benzene, (1,3-bis(methacryloxy)-2-chlorodimethylsilylpropyl)benzene, (1,3-bis(methacryloxy)-4-chlorodimethylsilylpropyl)benzene, (1,3-bis(methacryloxy)-5-chlorodimethylsilylpropyl)benzene and (1,4-bis(methacryloxy)-2-chlorodimethylsilylpropyl)benzene; (meth)acryloxy group-containing alkyldichlorosilane compounds such as acryloxypropylmethyldichlorosilane, acryloxypentylmethyldichlorosilane, acryloxyoctylmethyldichlorosilane, acryloxyethoxypropylmethyldichlorosilane, (4-dichloromethylsilylpropyl-2-methoxy)phenyl acrylate, (2-dichloromethylsilylpropyl-1-acryloxy)phenyl acrylate, (1,2-bis(acryloxy)-3-dichloromethylsilylpropyl)benzene, (1,2-bis(acryloxy)-4-dichloromethylsilylpropyl)benzene, (1,2-bis(acryloxy)-5-dichloromethylsilylpropyl)benzene, (1,3-bis(acryloxy)-2-dichloromethylsilylpropyl)benzene, (1,3-bis(acryloxy)-4-dichloromethylsilylpropyl)benzene, (1,3-bis(acryloxy)-5-dichloromethylsilylpropyl)benzene, (1,4-bis(acryloxy)-2-dichloromethylsilylpropyl)benzene, methacryloxypropylmethyldichlorosilane, methacryloxypentylmethyldichlorosilane, methacryloxyoctylmethyldichlorosilane, methacryloxyethoxypropylmethyldichlorosilane, (4-dichloromethylsilylpropyl-2-methoxy)phenyl methacrylate, (2-dichloromethylsilylpropyl-1-acryloxy)phenyl methacrylate, (1,2-bis(methacryloxy)-3-dichloromethylsilylpropyl)benzene, (1,2-bis(methacryloxy)-4-dichloromethylsilylpropyl)benzene, (1,2-bis(methacryloxy)-5-dichloromethylsilylpropyl)benzene, (1,3-bis(methacryloxy)-2-dichloromethylsilylpropyl)benzene, (1,3-bis(methacryloxy)-4-dichloromethylsilylpropyl)benzene, (1,3-bis(methacryloxy)-5-dichloromethylsilylpropyl)benzene and (1,4-bis(methacryloxy)-2-dichloromethylsilylpropyl)benzene; and (meth)acryloxy group-containing trichlorosilane compounds such as acryloxypropyltrichlorosilane, acryloxypentyltrichlorosilane, acryloxyoctyltrichlorosilane, acryloxyethoxypropylmethyldichlorosilane, (4-trichlorosilylpropyl-2-methoxy)phenyl acrylate, (2-trichlorosilylpropyl-1-acryloxy)phenyl acrylate, (1,2-bis(acryloxy)-3-trichlorosilylpropyl)benzene, (1,2-bis(acryloxy)-4-trichlorosilylpropyl)benzene, (1,2-bis(acryloxy)-5-trichlorosilylpropyl)benzene, (1,3-bis(acryloxy)-2-trichlorosilylpropyl)benzene, (1,3-bis(acryloxy)-4-trichlorosilylpropyl)benzene, (1,3-bis(acryloxy)-5-trichlorosilylpropyl)benzene, (1,4-bis(acryloxy)-2-trichlorosilylpropyl)benzene, methacryloxypropyltrichlorosilane, methacryloxypentyltrichlorosilane, methacryloxyoctyltrichlorosilane, methacryloxyethoxypropylmethyldichlorosilane, (4-trichlorosilylpropyl-2-methoxy)phenyl methacrylate, (2-trichlorosilylpropyl-1-acryloxy)phenyl methacrylate, (1,2-bis(methacryloxy)-3-trichlorosilylpropyl)benzene, (1,2-bis(methacryloxy)-4-trichlorosilylpropyl)benzene, (1,2-bis(methacryloxy)-5-trichlorosilylpropyl)benzene, (1,3-bis(methacryloxy)-2-trichlorosilylpropyl)benzene, (1,3-bis(methacryloxy)-4-trichlorosilylpropyl)benzene, (1,3-bis(methacryloxy)-5-trichlorosilylpropyl)benzene and (1,4-bis(methacryloxy)-2-trichlorosilylpropyl)benzene.

Of these, in terms of the usefulness of the product, acryloxypropyldimethylchlorosilane, acryloxypentyldimethylchlorosilane, acryloxyoctyldimethylchlorosilane, (4-chlorodimethylsilylpropyl-2-methoxy)phenyl acrylate and (2-chlorodimethylsilylpropyl-1-acryloxy)phenyl acrylate are preferred.

Within the (meth)acryloxy group-containing organosilicon compounds encompassed by Compound (3), acryloxy group-containing organosilicon compounds of general formula (6) below (referred to below as "Compound (6)") are compounds which include a benzene ring within the molecule, have a high solubility and show promise in use as various types of resin-modifying materials. 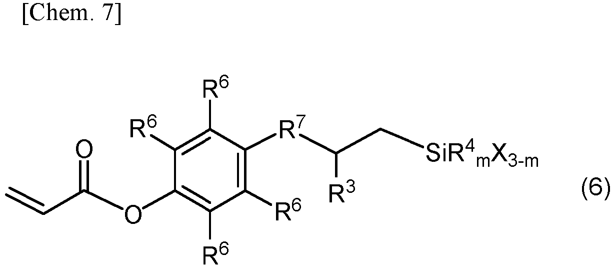 In this formula, R³, R⁴, X and m have the same meanings as above.

In general formula (6), each R⁶ is independently a hydrogen atom, a substituted or unsubstituted monovalent hydrocarbon group of 1 to 10 carbon atoms, preferably 1 to 6 carbon atoms, more preferably 1 to 4 carbon atoms, which may include a heteroatom, or an acryloxy group.

The monovalent hydrocarbon groups of R⁶ may be linear, branched or cyclic. Specific examples include linear alkyl groups such as methyl, ethyl, n-propyl, n-butyl, n-pentyl, n-hexyl, n-heptyl, n-octyl and decyl groups; branched alkyl groups such as isopropyl, isobutyl, sec-butyl, tert-butyl, neopentyl, thexyl and 2-ethylhexyl groups; cyclic alkyl groups such as cyclopentyl and cyclohexyl groups; alkenyl groups such as vinyl, allyl (2-propenyl), 1-propenyl, butenyl, pentenyl and octenyl groups; aryl groups such as phenyl and tolyl groups; and aralkyl groups such as benzyl and phenethyl groups.

The monovalent hydrocarbon groups of R⁶ may have one or more heteroatom such as an ether group (-O-) or a thioether group (-S-) interposed on the molecular chain.

In addition, some or all of the hydrogen atoms on the monovalent hydrocarbon groups of R⁶ may be substituted with other substituents. Examples of these substituents include alkoxy groups of 1 to 6 carbon atoms, such as methoxy, ethoxy and (iso)propoxy groups; halogen atoms such as fluorine, chlorine, bromine and iodine atoms; aryl groups of 6 to 10 carbon atoms, such as phenyl and tolyl groups; and aralkyl groups of 7 to 10 carbon atoms, such as benzyl and phenethyl groups.

In above formula (6), R⁷ is a single bond or a divalent hydrocarbon group of 1 to 10 carbon atoms, preferably 3 to 8 carbon atoms, more preferably 3 to 6 carbon atoms, which may include O or S.

The divalent hydrocarbon group of 1 to 10 carbon atoms of R⁷ may be linear, branched or cyclic. Specific examples include linear alkylene groups such as methylene, ethylene, trimethylene, tetramethylene, hexamethylene, octamethylene and decylene groups; branched alkylene groups such as propylene (methylethylene) and methyltrimethylene groups; cyclic alkylene groups such as the cyclohexylene group; alkenylene groups such as the propenylene group; arylene groups such as the phenylene group; and aralkylene groups such as the methylenephenylene and methylenephenylenemethylene groups.

Even among these, from the standpoint of the availability of the starting materials, linear alkylene groups and aralkylene groups are preferred.

The divalent hydrocarbon group containing O or S of R⁷ is exemplified by alkyleneoxyalkylene groups and alkylenethioalkylene groups. Examples of these alkylene groups include the groups mentioned above as examples of the linear, branched or cyclic alkylene groups of R⁷.

The number of acryloxy groups included in Compound (6) is at least one, preferably from 1 to 4, and more preferably 1 or 2. By including an acryloxy group in Compound (6), it is possible for the acryloxy group to copolymerize with various radical polymerizable monomers.

Specific examples of Compound (6) include (meth)acryloxy group-containing dialkylchlorosilane compounds such as (4-chlorodimethylsilylethyl)phenyl acrylate, (1,2-bis(acryloxy)-4-chlorodimethylsilylethyl)benzene, (1,3-bis(acryloxy)-4-chlorodimethylsilylethyl)benzene, (4-chlorodimethylsilylethyl)phenyl methacrylate, (1,2-bis(methacryloxy)-4-chlorodimethylsilylethyl)benzene, (1,3-bis(methacryloxy)-4-chlorodimethylsilylethyl)benzene, (4-chlorodimethylsilylpropyl-2-methoxy)phenyl acrylate, (1,2-bis(acryloxy)-4-chlorodimethylsilylpropyl)benzene, (1,3-bis(acryloxy)-4-chlorodimethylsilylpropyl)benzene, (4-chlorodimethylsilylpropyl-2-methoxy)phenyl methacrylate, (1,2-bis(methacryloxy)-4-chlorodimethylsilylpropyl)benzene and (1,3-bis(methacryloxy)-4-chlorodimethylsilylpropyl)benzene; (meth)acryloxy group-containing alkyldichlorosilane compounds such as (4-dichloromethylsilylpropyl-2-methoxy)phenyl acrylate, (1,2-bis(acryloxy)-4-dichloromethylsilylpropyl)benzene, (1,3-bis(acryloxy)-4-dichloromethylsilylpropyl)benzene, (4-dichloromethylsilylpropyl-2-methoxy)phenyl methacrylate, (1,2-bis(methacryloxy)-4-dichloromethylsilylpropyl)benzene and (1,3-bis(methacryloxy)-4-dichloromethylsilylpropyl)benzene; and (meth)acryloxy group-containing trichlorosilane compounds such as (4-trichlorosilylpropyl-2-methoxy)phenyl acrylate, (1,2-bis(acryloxy)-4-trichlorosilylpropyl)benzene, (1,3-bis(acryloxy)-4-trichlorosilylpropyl)benzene, (4-trichlorosilylpropyl-2-methoxy)phenyl methacrylate, (1,2-bis(methacryloxy)-4-trichlorosilylpropyl)benzene and (1,3-bis(methacryloxy)-4-trichlorosilylpropyl)benzene.

Of these, in terms of the usefulness of the product and the ease of synthesis, (4-chlorodimethylsilylpropyl-2-methoxy)phenyl acrylate and (1,2-bis(acryloxy)-4-chlorodimethylsilylpropyl)benzene are preferred.

Purification techniques employed in conventional organic synthesis, such as filtration, distillation, vacuum stripping, various types of chromatography and treatment using adsorbents, may be suitably selected and used to isolate the target compound, i.e., Compound (3) or Compound (6), from the reaction mixtures obtained in the above series of reactions.

Of these, from the standpoint of the ability to highly purify the target compound, purification by distillation is preferred. Also, because Compound (3) has a polymerizable (meth)acryloxy group, it is desirable for the thermal history to be as short as possible. To this end, it is preferable for the distillation apparatus to have a low theoretical plate number; purification by thin-film distillation is preferred.

Where necessary, the above-described polymerization inhibitor may be added in the purification step as well.

Above-described Compound (1) used in this invention can be obtained by subjecting an unsaturated bond-containing organoxysilane compound of general formula (4) below (referred to below as "Compound (4)") and a hydrohalosilane compound of general formula (5) below (referred to below as "Compound (5)") to a hydrosilylation reaction in the presence of a platinum catalyst. 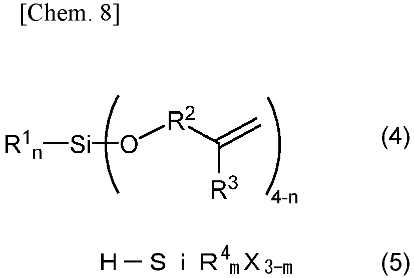 In these formulas, R¹ to R³, X, n and m are as defined above.

Specific examples of Compound (4) include alkenyl(oxy) group-containing trialkylsilane compounds such as allyloxytrimethylsilane, allyloxytriethylsilane, allyloxy-tert-butyldimethylsilane, allyloxytriisopropylsilane, allyloxydimethylhexylsilane, allyloxydimethyloctylsilane, allyloxydimethyldecylsilane, allyloxydimethyldodecylsilane, allyloxydimethyltetradecylsilane, allyloxydimethylhexadecylsilane, allyloxydimethyloctadecylsilane, allyloxydiphenylmethylsilane, pentenoxytrimethylsilane, pentenoxytriethylsilane, pentenoxy-tert-butyldimethylsilane, pentenoxytriisopropylsilane, octenoxytrimethylsilane, octenoxytriethylsilane, octenoxy-tert-butyldimethylsilane, octenoxytriisopropylsilane, (4-allyl-2-methoxy-1-trimethylsiloxy)benzene, (2-allyl-1-trimethylsiloxy)benzene, (1,2-bis(trimethylsiloxy)-3-allyl)benzene, (1,2-bis(trimethylsiloxy)-4-allyl)benzene, (1,3-bis(trimethylsiloxy)-2-allyl)benzene, (1,3-bis(trimethylsiloxy)-4-allyl)benzene, (1,3-bis(trimethylsiloxy)-5-allyl)benzene and (1,4-bis(trimethylsiloxy)-2-allyl)benzene; dialkenyloxydialkylsilane compounds such as diallyloxydimethylsilane, diallyloxyethylmethylsilane, diallyloxydipropylsilane, diallyloxydibutylsilane, diallyloxyphenylmethylsilane, diallyloxydiphenylsilane, dipentenoxydimethylsilane, dipentenoxyethylmethylsilane, dipentenoxydipropylsilane, dipentenoxydibutylsilane, dipentenoxyphenylmethylsilane, dipentenoxydiphenylsilane, dioctenoxydimethylsilane, dioctenoxyethylmethylsilane, dioctenoxydipropylsilane, dioctenoxydibutylsilane, dioctenoxyphenylmethylsilane and dioctenoxydiphenylsilane; trialkenyloxyalkylsilane compounds such as triallyloxymethylsilane, triallyloxyhexylsilane, triallyloxyoctylsilane, triallyloxyphenylsilane, tripentenoxymethylsilane, tripentenoxyhexylsilane, tripentenoxyoctylsilane, tripentenoxyphenylsilane, trioctenoxymethylsilane, trioctenoxyhexylsilane, trioctenoxyoctylsilane and trioctenoxyphenylsilane; and tetraalkenyloxysilane compounds such as tetraallyloxysilane, tetrapentenoxysilane and tetraoctenoxysilane.

Specific examples of Compound (5) include dialkylchlorosilane compounds such as dimethylchlorosilane and diphenylchlorosilane; alkyldichlorosilane compounds such as methyldichlorosilane and phenyldichlorosilane; and trichlorosilane.

The ratio in which Compound (4) and Compound (5) are used is not particularly limited, although from the standpoint of productivity, the amount of Compound (5) per mole of unsaturated bonds included in Compound (4) is preferably from 0.8 to 2.0 moles, more preferably from 0.8 to 1.5 moles, and even more preferably from 0.9 to 1.1 moles.

In the hydrosilylation reaction, a platinum compound is used as the catalyst. Specific examples of the platinum compound include chloroplatinic acid, alcohol solutions of chloroplatinic acid, toluene or xylene solutions of a platinum-1,3-divinyl-1,1,3,3-tetramethyldisiloxane complex, tetrakis(triphenylphosphine)platinum, dichlorobis(triphenylphosphine)platinum, dichlorobis(acetonitrile)platinum, dichlorobis(benzonitrile)platinum, dichloro(cyclooctadiene)platinum and platinum-activated carbon.

The amount of platinum compound used is not particularly limited. However, in terms of productivity, the amount per mole of unsaturated bonds included in Compound (4) is preferably from 0.000001 to 0.2 mole, and more preferably from 0.00001 to 0.1 mole.

The reaction temperature in the hydrosilylation reaction is not particularly limited. However, from the standpoint of product stability, the temperature is preferably between 0°C and 200°C, and more preferably between 20°C and 150°C.

The reaction time in the hydrosilylation reaction is not particularly limited. However, from the standpoint of product stability, the reaction time is preferably from 1 to 40 hours, and more preferably from 1 to 20 hours.

To prevent catalyst deactivation and the hydrolysis of Compounds (4) and (5), the hydrosilylation reaction is preferably carried out in an atmosphere of inert gas such as nitrogen or argon.

The hydrosilylation reaction proceeds even in the absence of a solvent, although using a solvent is also possible. The solvent used is exemplified by the same solvents as those used in the siloxy-(meth)acryloxy exchange reaction.

### EXAMPLES

Examples and Comparative Examples are given below by way of illustration, although the invention is not limited by these Examples.

In the Examples and Comparative Examples, the yields (surface area ratios) of (meth)acryloxy adduct (B) and bis-adduct (C) were determined as follows from the results of gas chromatographic analysis (also referred to below as "GC analysis").

### Target Compound (A): (surface area of A)/(surface area of A + surface area of B + surface area of C) × 100

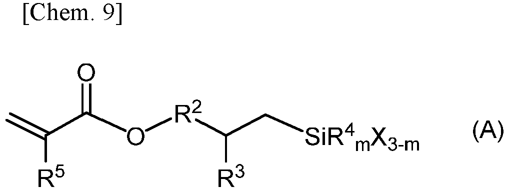

### (Meth)acryloxy Adduct (B): (surface area of B)/(surface area of A + surface area of B + surface area of C) × 100

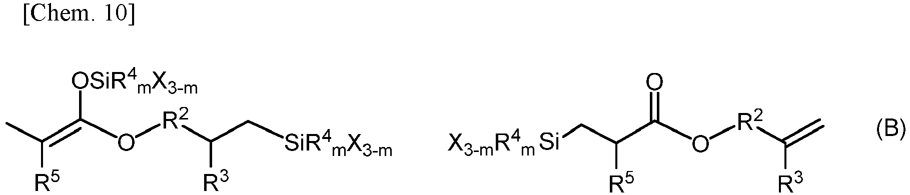

### Bis-Adduct (C): (surface area of C)/(surface area of A + surface area of B + surface area of C) × 100

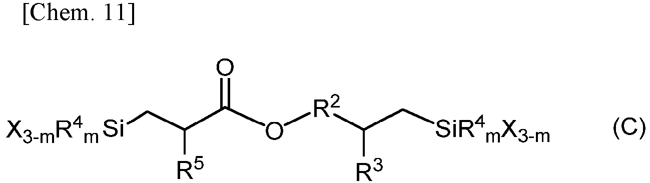

### [Example 1] Synthesis of 3-Acryloxypropyldimethylchlorosilane

The interior of a four-neck glass flask equipped with a stirrer, a thermometer and a reflux condenser was purged with nitrogen, charged with 266.9 g (1.000 mol) of triethylsiloxypropyldimethylchlorosilane, 0.083 g (0.0010 mol) of zinc oxide and 0.1 g of 2,6-di-tert-butyl-4-methylphenol (di(tert-butyl)hydroxytoluene, abbreviated below as "BHT"), and heated to 70°C. To this was added 91.4 g (1.01 mol) of acryloyl chloride and the mixture was stirred at the same temperature for 3 hours. The reaction mixture was then subjected to GC analysis, whereupon the disappearance of triethylsiloxypropyldimethylchlorosilane and the formation of 3-acryloxypropyldimethylchloroislane were confirmed. The yields of the products are shown in Table 1.

The reaction mixture was distilled, giving 176.9 g of 3-acryloxypropyldimethylchlorosilane having a purity of 95% (overall yield, 86%).

### [Example 2] Synthesis of 8-Acryloxyoctyldimethylchlorosilane

The interior of a four-neck glass flask equipped with a stirrer, a thermometer and a reflux condenser was purged with nitrogen, charged with 129 g (0.384 mol) of triethylsiloxyoctyldimethylchlorosilane, 0.302 g (0.00371 mol) of zinc oxide and 0.06 g of BHT, and heated to 70°C. To this was added 35.7 g (0.394 mol) of acryloyl chloride and the mixture was stirred at the same temperature for 1 hour. The reaction mixture was then subjected to GC analysis, whereupon the disappearance of triethylsiloxyoctyldimethylchlorosilane and the formation of 8-acryloxyoctyldimethylchlorosilane were confirmed. The yields of the products are shown in Table 1.

The reaction mixture was distilled, giving 93.8 g of 8-acryloxyoctyldimethylchlorosilane having a purity of 95% (overall yield, 85%).

### [Example 3] Synthesis of (4-Chlorodimethylsilylpropyl-2-methoxy)phenyl Acrylate

The interior of a four-neck glass flask equipped with a stirrer, a thermometer and a reflux condenser was purged with nitrogen, charged with 193 g (0.583 mol) of (4-chlorodimethylsilylpropyl-2-methoxy-1-trimethylsiloxy)benzene, 0.048 g (0.00059 mol) of zinc oxide and 0.09 g of BHT, and heated to 80°C. To this was added 53.9 g (0.596 mol) of acryloyl chloride and the mixture was stirred at the same temperature for 1 hour. The reaction mixture was then subjected to GC analysis, whereupon the disappearance of (4-chlorodimethylsilylpropyl-2-methoxy-1-trimethylsiloxy)benzene and the formation of (4-chlorodimethylsilylpropyl-2-methoxy)phenyl acrylate were confirmed. The yields of the products are shown in Table 1.

The reaction mixture was distilled, giving 119 g of (4-chlorodimethylsilylpropyl-2-methoxy)phenyl acrylate having a purity of at least 99% (overall yield, 61%). The ¹H-NMR spectrum of the compound obtained is shown in FIG. 1.

### [Example 4] Synthesis of (2-Chlorodimethylsilylpropyl)phenyl Acrylate

The interior of a four-neck glass flask equipped with a stirrer, a thermometer and a reflux condenser was purged with nitrogen, charged with 272 g (0.904 mol) of (2-chlorodimethylsilylpropyl-1-trimethylsiloxy)benzene, 0.75 g (0.00922 mol) of zinc oxide and 0.12 g of BHT, and heated to 80°C. To this was added 83.0 g (0.922 mol) of acryloyl chloride and the mixture was stirred at the same temperature for 1 hour. The reaction mixture was then subjected to GC analysis, whereupon the disappearance of (2-chlorodimethylsilylpropyl-1-trimethylsiloxy)benzene and the formation of (2-chlorodimethylsilylpropyl)phenyl acrylate were confirmed. The yields of the product are shown in Table 1.

The reaction mixture was distilled, giving 166 g of (4-chlorodimethylsilylpropyl-2-methoxy)phenyl acrylate having a purity of at least 99% (overall yield, 61%).

### [Example 5] Synthesis of (3-Acryloxyethoxypropyldimethylchlorosilane

The interior of a four-neck glass flask equipped with a stirrer, a thermometer and a reflux condenser was purged with nitrogen, charged with 31.0 g (0.0997 mol) of triethylsiloxyethoxypropyldimethylchlorosilane, 0.184 g (0.00226 mol) of zinc oxide and 0.01 g of BHT, and heated to 70°C. To this was added 9.5 g (0.105 mol) of acryloyl chloride and the mixture was stirred at the same temperature for 3 hours. The reaction mixture was then subjected to GC analysis, whereupon the disappearance of triethylsiloxypropyldimethylchlorosilane and the formation of (3-acryloxyethoxypropyldimethylchlorosilane were confirmed. The yields of the products are shown in Table 1.

### [Example 6] Synthesis of 3-Acryloxypropyldimethylchlorosilane

The interior of a four-neck glass flask equipped with a stirrer, a thermometer and a reflux condenser was purged with nitrogen, charged with 130.4 g (1.001 mol) of acryloxytrimethylsilane and 0.975 g (0.0001 mol in terms of platinum atoms) of a 2-ethylhexanol solution of hexachloroplatinic(IV) acid, and heated to 80°C. To this was added dropwise over 3 hours 81.4 g (0.860 mol) of dimethylchlorosilane and the mixture was stirred at the same temperature for 1 hour. The reaction mixture was then subjected to GC analysis, whereupon the formation of trimethylsiloxypropyldimethylchlorosilane was confirmed.

The reaction mixture was cooled to room temperature, following which 0.814 g (0.0100 mol) of zinc oxide and 0.1 g of BHT were added, and the temperature was adjusted to 80°C. To this was added 90.5 g (1.00 mol) of acryloyl chloride, and the mixture was stirred at the same temperature for 1 hour. The reaction mixture was then subjected to GC analysis, whereupon the disappearance of trimethylsiloxypropyldimethylchlorosilane and the formation of 3-acryloxypropyldimethylchlorosilane were confirmed. The yields of the products are shown in Table 1.

The reaction mixture was distilled, giving 133.1 g of 3-acryloxypropyldimethylchlorosilane having a purity of 95% (overall yield, 64%).

### [Example 7] Synthesis of 3-Acryloxypropyldimethylchlorosilane

The interior of a four-neck glass flask equipped with a stirrer, a thermometer and a reflux condenser was purged with nitrogen, charged with 135.6 g (0.7829 mol) of allyloxytriethylsilane and 0.383 g (0.000393 mol in terms of platinum atoms) of a 2-ethylhexanol solution of hexachloroplatinic(IV) acid, and heated to 80°C. To this was added dropwise over 3 hours 64.2 g (0.679 mol) of dimethylchlorosilane and the mixture was stirred at the same temperature for 1 hour. The reaction mixture was then subjected to GC analysis, whereupon the formation of chlorodimethylpropoxytriethylsilane was confirmed.

The reaction mixture was cooled to room temperature, following which 1.38 g (0.0170 mol) of zinc oxide and 0.08 g of BHT were added, and the temperature was adjusted to 80°C. To this was added 72.7 g (0.803 mol) of acryloyl chloride, and the mixture was stirred at the same temperature for 1 hour. The reaction mixture was then subjected to GC analysis, whereupon the disappearance of triethylsiloxypropyldimethylchlorosilane and the formation of 3-acryloxypropyldimethylchlorosilane were confirmed. The yields of the products are shown in Table 1.

The reaction mixture was distilled, giving 99.0 g of 3-acryloxypropyldimethylchlorosilane having a purity of 95% (overall yield, 61%).

### [Example 8] Synthesis of 3-Acryloxypropyldimethylchlorosilane

The interior of a four-neck glass flask equipped with a stirrer, a thermometer and a reflux condenser was purged with nitrogen, charged with 17.1 g (0.0992 mol) of allyloxy-tert-butyldimethylsilane and 0.0914 g (0.00000937 mol in terms of platinum atoms) of a 2-ethylhexanol solution of hexachloroplatinic(IV) acid, and heated to 80°C. To this was added dropwise over 3 hours 8.6 g (0.091 mol) of dimethylchlorosilane and the mixture was stirred at the same temperature for 1 hour. The reaction mixture was then subjected to GC analysis, whereupon the formation of chlorodimethylpropoxy-tert-butyldimethylsilane was confirmed.

The reaction mixture was cooled to room temperature, following which 0.0814 g (0.00100 mol) of zinc chloride and 0.01 g of BHT were added, and the temperature was adjusted to 100°C. To this was added 9.2 g (0.10 mol) of acryloyl chloride, and the mixture was stirred at the same temperature for 1 hour. The reaction mixture was then subjected to GC analysis, whereupon the disappearance of tert-butyldimethylsiloxypropyldimethylchlorosilanesilane and the formation of 3-acryloxypropyldimethylchlorosilane were confirmed. The yields of the products are shown in Table 1.

### [Example 9] Synthesis of 3-Acryloxypropyldimethylchlorosilane

The interior of a four-neck glass flask equipped with a stirrer, a thermometer and a reflux condenser was purged with nitrogen, charged with 17.2 g (0.100 mol) of diallyloxydimethylsilane and 0.082 g (0.000084 mol in terms of platinum atoms) of a 2-ethylhexanol solution of hexachloroplatinic(IV) acid, and heated to 60°C. To this was added dropwise over 3 hours 17.0 g (0.18 mol) of dimethylchlorosilane and the mixture was stirred at the same temperature for 1 hour. The reaction mixture was then subjected to GC analysis, whereupon the formation of bis(chlorodimethylpropoxy)dimethylsilane was confirmed.

The reaction mixture was cooled to room temperature, following which 0.337 g (0.00414 mol) of zinc oxide and 0.01 g of BHT were added, and the temperature was adjusted to 80°C. To this was added 18.5 g (0.204 mol) of acryloyl chloride, and the mixture was stirred at the same temperature for 1 hour. The reaction mixture was then subjected to GC analysis, whereupon the disappearance of bis(chlorodimethylpropoxy)dimethylsilane and the formation of 3-acryloxypropyldimethylchlorosilane were confirmed. The yields of the products are shown in Table 1.

### [Example 10] Synthesis of 5-Acryloxypentyldimethylchlorosilane

The interior of a four-neck glass flask equipped with a stirrer, a thermometer and a reflux condenser was purged with nitrogen, charged with 40.1 g (0.200 mol) of pentenoxytriethylsilane and 0.099 g (0.000010 mol in terms of platinum atoms) of a 2-ethylhexanol solution of hexachloroplatinic(IV) acid, and heated to 80°C. To this was added dropwise over 3 hours 17.2 g (0.181 mol) of dimethylchlorosilane and the mixture was stirred at the same temperature for 1 hour. The reaction mixture was then subjected to GC analysis, whereupon the formation of triethylsiloxypentyldimethylchlorosilane was confirmed.

The reaction mixture was cooled to room temperature, following which 0.343 g (0.00421 mol) of zinc oxide and 0.02 g of BHT were added, and the temperature was adjusted to 80°C. To this was added 19.0 g (0.210 mol) of acryloyl chloride, and the mixture was stirred at the same temperature for 1 hour. The reaction mixture was then subjected to GC analysis, whereupon the disappearance of triethylsiloxypentyldimethylchlorosilane and the formation of 5-acryloxypentyldimethylchlorosilane were confirmed. The yields of the products are shown in Table 1.

The reaction mixture was distilled, giving 32.0 g of 5-acryloxypentyldimethylchlorosilane having a purity of 98% (overall yield, 68%).

### [Example 11] Synthesis of 3-Methacryloxypropyldimethylchlorosilane

The interior of a four-neck glass flask equipped with a stirrer, a thermometer and a reflux condenser was purged with nitrogen, charged with 266.9 g (1.000 mol) of triethylsiloxypropyldimethylchlorosilane, 0.083 g (0.0010 mol) of zinc oxide and 0.1 g of BHT, and heated to 70°C. To this was added 107 g (1.02 mol) of methacryloyl chloride and the mixture was stirred at the same temperature for 3 hours. The reaction mixture was then subjected to GC analysis, whereupon the disappearance of triethylsiloxypropyldimethylchlorosilane and the formation of 3-methacryloxypropyldimethylchlorosilane were confirmed. The yields of the products are shown in Table 1.

### [Example 12] Synthesis of 8-Acryloxyoctyltrichlorosilane

The interior of a four-neck glass flask equipped with a stirrer, a thermometer and a reflux condenser was purged with nitrogen, charged with 209 g (0.554 mol) of triethylsiloxyoctyltrichlorosilane, 0.90 g (0.011 mol) of zinc oxide and 0.08 g of BHT, and heated to 70°C. To this was added 51.1 g (0.565 mol) of acryloyl chloride and the mixture was stirred at the same temperature for 3 hours. The reaction mixture was then subjected to GC analysis, whereupon the disappearance of triethylsiloxyoctyltrichlorosilane and the formation of 8-acryloxyoctyltrichlorosilane were confirmed. The yields of the products are shown in Table 1.

### [Example 13] Synthesis of 3-Acryloxypropyldimethylchlorosilane

The interior of a four-neck glass flask equipped with a stirrer, a thermometer and a reflux condenser was purged with nitrogen, charged with 266.9 g (1.000 mol) of triethylsiloxypropyldimethylchlorosilane, 2.2 g (0.0098 mol) of copper(II) bromide and 0.1 g of BHT, and heated to 70°C. To this was added 91.4 g (1.01 mol) of acryloyl chloride and the mixture was stirred at the same temperature for 3 hours. The reaction mixture was then subjected to GC analysis, whereupon the disappearance of triethylsiloxypropyldimethylchlorosilane and the formation of 3-acryloxypropyldimethylchlorosilane were confirmed. The yields of the products are shown in Table 1.

### [Example 14] Synthesis of 3-Acryloxypropyldimethylchlorosilane

The interior of a four-neck glass flask equipped with a stirrer, a thermometer and a reflux condenser was purged with nitrogen, charged with 631 g (1.711 mol) of allyloxydimethyloctadecylsilane and 0.55 g (0.000085 mol in terms of platinum atoms) of a toluene solution of platinum-1,3-divinyl-1,1,3,3-tetramethyldisiloxane complex, and heated to 60°C. To this was added dropwise over 3 hours 146 g (1.54 mol) of dimethylchlorosilane, and the mixture was stirred at the same temperature for 1 hour. The reaction mixture was then subjected to GC analysis, whereupon the formation of dimethyloctadecylsiloxypropyldimethylchlorosilane was confirmed.

The reaction mixture was cooled to room temperature, following which 2.79 g (0.0342 mol) of zinc oxide and 0.1 g of BHT were added, and the temperature was adjusted to 80°C. To this was added 163 g (1.80 mol) of acryloyl chloride, and the mixture was stirred at the same temperature for 1 hour. The reaction mixture was then subjected to GC analysis, whereupon the disappearance of dimethyloctadecylsiloxypropyldimethylchlorosilane and the formation of 3-acryloxypropyldimethylchlorosilane were confirmed. The yields of the products are shown in Table 1.

The reaction mixture was distilled, giving 197 g of 3-acryloxypropyldimethylchlorosilane having a purity of 98% (overall yield, 62%).

### [Comparative Example 1] Synthesis of 3-Acryloxypropyldimethylchlorosilane

The interior of a four-neck glass flask equipped with a stirrer, a thermometer and a reflux condenser was purged with nitrogen, charged with 224.2 g (2.000 mol) of allyl acrylate, 0.975 g (0.000100 mol in terms of platinum atoms) of a 2-ethylhexanol solution of hexachloroplatinic(IV) acid and 0.2 g of BHT, and heated to 80°C. To this was added 208.1 g (2.200 mol) of dimethylchlorosilane over a period of 3 hours and the mixture was stirred at the same temperature for 1 hour. The reaction mixture was then subjected to GC analysis, whereupon the formation of 3-acryloxypropyldimethylchlorosilane was confirmed. The yields of the products are shown in Table 1.

The reaction mixture was distilled, giving 3-acryloxypropyldimethylchlorosilane having a purity of 75%. This was again distilled, giving 74.4 g of 3-acryloxypropyldimethylchlorosilane having a purity of 97% (overall yield, 18%).

**[Table 1]**

| | A Target compound (surface area %) | B (Meth)acrylic adduct (surface area %) | C Bis-adduct (surface area %) |
|---|---|---|---|
| Example 1 | 98.2 | 0.0 | 0.0 |
| Example 2 | 98.5 | 0.0 | 0.0 |
| Example 3 | 100 | 0.0 | 0.0 |
| Example 4 | 100 | 0.0 | 0.0 |
| Example 5 | 100 | 0.0 | 0.0 |
| Example 6 | 97.0 | 0.0 | 0.0 |
| Example 7 | 93.7 | 0.0 | 0.0 |
| Example 8 | 98.0 | 0.0 | 0.0 |
| Example 9 | 93.8 | 0.0 | 0.0 |
| Example 10 | 98.3 | 0.0 | 0.0 |
| Example 11 | 89.1 | 0.0 | 0.0 |
| Example 12 | 100 | 0.0 | 0.0 |
| Example 13 | 98.0 | 0.0 | 0.0 |
| Example 14 | 100 | 0.0 | 0.0 |
| Comparative Example 1 | 70.0 | 14.2 | 15.8 |

It is apparent from the results shown in Table 1 that, in Examples 1 to 14, each of which employs the method of preparation of this invention, a (meth)acryloxyhalosilane which is the target compound (A) can be selectively prepared without using a compound having self-reactivity and without the formation of any (meth)acryloxy adduct (B) or bis-adduct (C). The target compound can thus be stably obtained in a high yield and at a high purity by the method of this invention.

## Claims

1. A method for preparing a (meth)acryloxy group-containing organosilicon compound, which method comprises the step of subjecting a siloxyalkylhalosilane compound of general formula (1) below 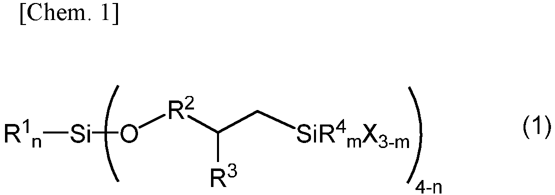 (wherein R¹ is an unsubstituted monovalent hydrocarbon group of 1 to 20 carbon atoms, each R² is independently a substituted or unsubstituted divalent hydrocarbon group of 1 to 20 carbon atoms which may include at least one atom selected from the group consisting of O, S and Si, each R³ is independently a hydrogen atom or an unsubstituted monovalent hydrocarbon group of 1 to 10 carbon atoms, each R⁴ is independently an unsubstituted monovalent hydrocarbon group of 1 to 10 carbon atoms, X is a chlorine atom or a bromine atom, m is 0, 1 or 2, and n is 0, 1, 2 or 3) and a carboxylic acid halide of general formula (2) below 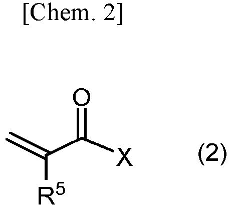 (wherein R⁵ is a hydrogen atom, a chlorine atom or an unsubstituted monovalent hydrocarbon group of 1 to 10 carbon atoms, and X is as defined above) to a siloxy-(meth)acryloxy exchange reaction in the presence of at least one metal compound selected from the group consisting of zinc compounds, copper compounds and iron compounds to obtain a (meth)acryloxy group-containing organosilicon compound of general formula (3) below 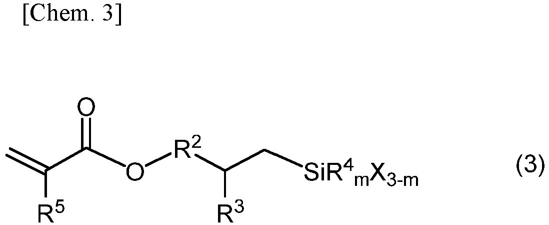 (wherein R² to R⁵, X and m are as defined above).

2. The method for preparing a (meth)acryloxy group-containing organosilicon compound according to claim 1, further comprising the step of subjecting an unsaturated bond-containing organoxysilane compound of general formula (4) below 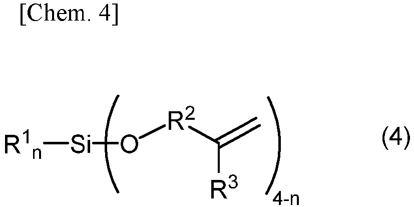 (wherein R¹ to R³ and n are as defined above) and a hydrohalosilane compound of general formula (5) below
H-SiR⁴ₘX₃₋ₘ (5)
(wherein R⁴, X and m are as defined above) to a hydrosilylation reaction in the presence of a platinum catalyst to obtain a siloxyalkylhalosilane compound of general formula (1).

3. An acryloxy group-containing organosilicon compound of general formula (6) below 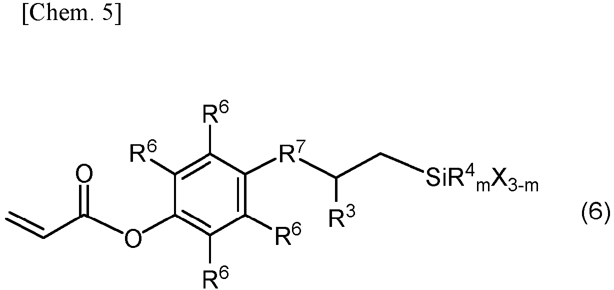 (wherein each R⁶ is independently a hydrogen atom, a substituted or unsubstituted monovalent hydrocarbon group of 1 to 10 carbon atoms which may include a heteroatom, or an acryloxy group, R⁷ is a single bond or a divalent hydrocarbon group of 1 to 10 carbon atoms which may include O or S, R³ is a hydrogen atom or an unsubstituted monovalent hydrocarbon group of 1 to 10 carbon atoms, each R⁴ is independently an unsubstituted monovalent hydrocarbon group of 1 to 10 carbon atoms, X is a chlorine atom or a bromine atom, and m is 0, 1 or 2).
